# EUROPEAN PATENT APPLICATION

(11) **EP 2 514 870 A1**
(43) Date of publication of application: **24.10.2012**
(21) Application number: 12002677.8
(22) Date of filing: 17.04.2012
(51) Int. Cl.: E01C 11/22, E03F 1/00, E02B 11/00

(54) **Site surfacing and the use thereof**

(30) Priority: 21.04.2011 BE 201100234
(71) Applicant: Verbruggen, Robert, 2870 Puurs (BE)
(72) Inventor: Verbruggen, Robert, 2870 Puurs (BE)
(74) Representative: Donné, Eddy

(57) **Abstract**

Site surfacing (2) with at least two layers, whereby a first layer is a top layer (15), characterised in that a second layer (18) located under the first layer at least partly consists of buffer stones (1) that are each provided with at least one buffer cavity (7) for water.

## Description

The present invention relates to a site surfacing and the use thereof.

More specifically, the invention relates to site surfacings for areas such as streets, car parks, and other constructed ground surfaces, for example around buildings, that have a buffering capacity for water.

This buffering capacity, which is sometimes compulsory, can prevent parts of a site from being flooded in the event of heavy rainfall, or water courses and sewers from being temporarily saturated and thereby causing flooding downstream, and it can also limit the total supply of water to sewers and the treatment plants linked to them, and thereby the costs of water treatment.

Instead of this, the water is buffered thanks to the buffering capacity and then guided slowly into the subsoil at the place where it has fallen.

As a result, this prevents a drop in the groundwater level as a result of the drainage of rainwater, or storage in buffer basins, instead of letting it infiltrate into the subsoil.

An example of such a site surfacing and the constructional elements, called buffer stones, used in it, is the paving described in EP 1.947.243.

A disadvantage of such a site surfacing is that the observable properties of such a buffer stone, such as roughness, colour, size and shape, and the constancy of it, can only be controlled and varied to a very limited extent, or not at all, during the production thereof.

This means that the use of such paving to obtain a buffering site surfacing brings about restrictions relating to the visual properties, cleaning requirements and roughness that do not optimally match the desires of the end user, which is disadvantageous.

A further disadvantage is that sand lying in the joints of such paving easily washes away into the buffer cavities, such that the buffer stones can move with respect to one another when a vehicle drives over them, such that the edges of the buffer stones can damage the street surface, which presents an unattractive visual appearance.

The accumulation of sand and other impurities in the buffer cavities reduces the buffering capacity of the paving over its lifetime.

An additional disadvantage is that, in order to obtain the desired observable surface properties of the paving, the buffer stones become more expensive to manufacture than is necessary on the basis of only the constructional-technical requirements.

It is also desirable to lay the paving as flat as possible, in order to make optimum use of the buffering capacity of the buffer stones, while a slight incline of the surfacing is also desirable for other reasons, such as connection to other paving or to doors, gates, etc.

The purpose of the present invention is to provide a solution to at least one of the aforementioned and other disadvantages by providing a site surfacing with at least two layers, whereby a first layer is a top layer, and whereby a second layer, located under the first layer, at least partly consists of buffer stones that are each provided with at least one buffer cavity for water whereby the first layer is porous, whereby layers between the first layer and the second layer, if present, are porous whereby the buffer stones each have a top surface, a bottom surface and sides that extend between the top and bottom surface, and that the buffer cavity of a buffer stone is open on two opposite sides of the buffer stone.

In this way the complete freedom of choice of the properties of the top layer of the site surfacing are combined with the good buffering properties of the site surfacing.

Because the second layer cannot be seen, it can also be made more cheaply because cheaper materials that only have to satisfy the technical requirements, for example recycled materials, can be chosen for the buffer stones, because there is a greater tolerance with regard to size, shape and surface finish, such that there is less production waste and cheaper production methods can thus be chosen, and because the laying of the second layer can be done with less accuracy.

Furthermore this has the advantage that sand between the joints of the buffer stones is not necessary to counteract movement with respect to one another, and thus damage to the edges, and that even if such damage occurs it has no detrimental consequences.

An even better effect is obtained if the second layer largely or even entirely consists of buffer stones.

Furthermore, the buffer stones can be supplied with water evenly over the entire area of the site surfacing, such that the drainage of water from the surface to the buffer cavities occurs more quickly and the site surfacing can thus better perform its buffering function.

Furthermore, this has the advantage with respect to the known paving that dirt, sand, plants or seeds that are carried with the water are held back by the first layer, such that the clogging of culverts in the buffer stones through which the buffer cavities can be supplied with water, or of the buffer cavities themselves, is greatly reduced or even prevented.

These culverts can be formed by porosities in the material of the buffer stone itself, and/or joints between the buffer stones, and/or channels made in the buffer stones.

If clogging nevertheless occurs, it will be limited to the first layer that can be cleaned or replaced more easily and cheaply than the second layer.

In this way a buffering site surfacing can be obtained that is completely flat, as needed for the storage of high stacks of pallets, crates, sea containers, concrete products or other goods, and where good water drainage of the surface is nevertheless desirable.

Compared to an inclined site surfacing this has the advantage that much less subsoil has to be moved and possibly removed. Also buffer basins, water pumps, storm drains and connecting channels, that are needed in traditional inclined site surfacings to buffer water, no longer have to be laid and maintained.

Preferably the buffer cavities have the form of a passageway between two opposite sides, whereby in at least one of the opposite sides there is a first recess to form a channel that connects the aforementioned buffer cavity to the top surface.

In at least one of the opposite sides there can be a second recess to form a channel that connects the aforementioned buffer cavity to the bottom surface.

These are practical embodiments of such a buffer stone that can also be manufactured cheaply.

By providing each buffer stone with grooves that connect the cavity-forming passageway with two corner edgings where every two sides meet, small channels can be formed between the cavities of adjacent buffer stones, so that a good distribution of water over a number of buffer cavities is possible.

As the main purpose of the buffer stones consists of temporarily storing water so that it can flow into the subsoil at the place where it has fallen, these small channels do not primarily act as horizontal water transport, but only as a link to adjacent buffer stones if a buffer cavity of one stone is full or practically full.

To this end these grooves preferably connect to the buffer cavity at a level equal to or above the level that represents two thirds of the volume of the buffer cavity.

In preferred embodiments the buffer stones are at least partly arranged according to a pattern such that the buffer cavities in a buffer stone are essentially closed off at one or both open ends of the passageway by adjacent buffer stones or other constructional elements that form part of the second layer or adjoin it.

As a result they can buffer well, due to a limited flow between the various buffer cavities, without much risk of flooding any parts of the site on a lower level on which the site surfacing has been placed, so that the water primarily flows to the subsoil at the place where it has fallen, without the risk of the water undesirably flowing away to water courses or sewers, such that the groundwater level is preserved.

This effect is reinforced if all or almost all buffer stones are arranged according to such a pattern.

In another preferred embodiment, the buffer stones are at least partly arranged according to a pattern such that a buffer cavity of a least one buffer stone has an open connection at both ends to a buffer cavity of another buffer stone to form a water channel.

In cases where accelerated horizontal water drainage is desired, this can easily be achieved in this way.

In a further preferred embodiment, the site surfacing comprises at least two parts, whereby the buffer stones of each part are arranged according to one of the above-mentioned ways, whereby at least one buffer cavity that is essentially closed off at one open end of the passageway by adjacent buffer stones or other constructional elements forms part of the water channel.

As a result, the water management of a site can be controlled by means of the site surfacing, by combining accelerated horizontal water transport over part of the site, and slowed horizontal water transport over another part, in both cases with good buffering.

As a result, the detrimental consequence of such an embodiment, i.e. an arrangement pattern that satisfies the technical but not the aesthetic requirements, in contrast to when it is constructed analogous to the known paving, is not relevant because this arrangement pattern cannot be seen thanks to the first layer.

In preferred embodiments, the first layer at least partly consists of paving elements between which porous joints are provided, or of paving elements that are porous, or a layer of granules, for example gravel or broken natural stone, or a growth such as grass.

As a result, a site surfacing can be chosen from a very wide variety of surface and visual properties, at the same time with a good buffering capacity and a low cost of the site surfacing.

As a result, a firebreak and/or escape route can be combined with a green zone.

Preferably, the second layer forms a foundation for the first layer of the site surfacing.

As a result, foundation material and the application of it can be saved.

In a further preferred embodiment both layers have a different incline, whereby the second layer is more horizontal than the first layer.

As a result, the second layer can be approximately or completely flat, so that its buffering capacity is utilised to the optimum, while the first layer can be on a incline to connect to another site surfacing or a sill of an opening in a building.

In a further preferred embodiment, the site surfacing is not provided with a drain that is designed to drain water from the site surfacing when the quantity of water in the buffer cavities is less than 50%, or preferably 75% or 95% of the volume of the buffer cavities.

It is indeed the purpose of the site surfacing that rainwater stays on the site covered by the site surfacing, except in exceptional circumstances, and goes into the subsoil below it.

Hence only an emergency water drain is provided, which in normal circumstances cannot act as a drain, for example through an inlet to the emergency drain that is placed at a level corresponding to the said high filling level of the buffer cavities.

The invention also comprises the use of an above-mentioned site surfacing to at least partly cover a site, whereby next to or on the site there is a construction that is not porous, and whereby the combination of the site and non-porous construction is provided with means to guide rainwater that falls on the non-porous construction to the part of the site covered by the site surfacing.

As a result, the water buffering capacity of the site can be used, even for a combination of a construction that is not porous in the vertical direction, such as a building and a site.

In a preferred variant of its usage, the means to guide rainwater that falls on the non-porous construction to the part of the site covered by the site surfacing, guide this rainwater to the second layer.

The first layer, although porous, only has a limited drainage capacity. In particular, in places where more water falls than just the rainwater of the place concerned, such as a downpipe of the building, this drainage capacity can easily be exceeded. By guiding this water directly to the second layer, for example via a rainwater pipe, this problem is prevented.

With the intention of better showing the characteristics of the invention, a preferred embodiment of a site surfacing according to the invention is described hereinafter by way of an example, without any limiting nature, with reference to the accompanying drawings, wherein:
Figure 1 shows a perspective view of a buffer stone that forms part of a site surfacing according to the invention;
figure 2 shows a vertical cross-section of a site surfacing according to the invention;
figure 3 shows a top view, according to line III-III of figure 2, of the site surfacing of figure 2 on a larger scale, whereby the layers above the second layer are partly removed;
figure 4 shows a schematic top view of a building and a site provided with a site surfacing according to the invention, whereby this site surfacing is shown according to the same cross-section as that of figure 3;
figure 5 shows a front view of an alternative buffer stone that can form part of a site surfacing according to the invention; and
figure 6 shows a horizontal cross-section of a specific use of a site surfacing according to the invention.

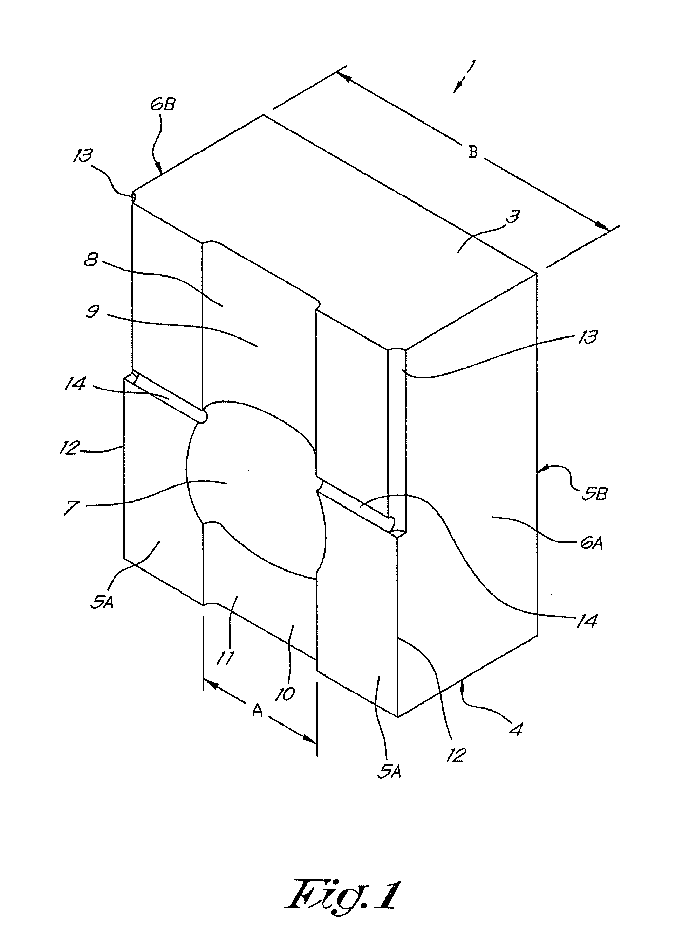

The buffer stone 1 shown in figure 1 for application in a site surfacing 2 according to the invention has a top surface 3, a bottom surface 4 located opposite the top surface 3, and two pairs of sides 5A,5B and 6A,6B that extend between the top and bottom surface 3,4.

In this case the buffer zone 1 has a top surface 3 and bottom surface 4 with a rectangular perimeter, so that there are two pairs of opposites sides 5A,5B,6A,6B.

In the buffer stone 1 there is a cavity, which in this case extends transversely as a passageway 7 through the buffer stone 1 between opposite sides 5A.

In one of the aforementioned sides, in this case 5A, at the level of the passageway 7 there is a first channel 8 that connects the top surface 3 to the cavity-forming passageway, and which in the embodiment shown is formed by a first recess 9 in the side 5A concerned.

Preferably there is a second channel 10 in the same side 5A, or alternatively in the opposite side 5B, that connects the bottom surface 4 to the passageway 7, whereby in this example this channel is formed by a second recess 11 in line with the first recess 9 of the first channel 8.

The width A of the passageway 7 is preferably less than or equal to half of the width B of the sides 5A, 5B concerned.

In the side 5A with recesses 9,11, a corner recess 13 is provided at the top, at or near one or two vertical corner edgings 12 where two sides 5A and 6A or 6B meet, over a certain height of the stone 1 in such a way that the corner recess 13 runs from the top surface 3 up to a level that approximately corresponds to the height of the passageway 5.

Also in the aforementioned side 5A that is provided with first and second recesses 9,11, one or more grooves 14 are provided, that preferably run parallel to the top surface 3, from the passageway 7 to a corner edging 12 of the buffer stone up to the corner recesses 13.

The term buffer stone 1 means a constructional element that has certain characteristics. The term buffer stone 1 does not imply that this constructional element necessarily has to be made from stone or stone-based materials.

In this example the buffer stone 1 is manufactured from concrete, whereby recycled granular material can form part of this concrete. Alternatively such a buffer stone 1 can be manufactured from natural stone, baked ceramic material or other usual stone-based materials, while other materials such as wood, metal and plastic are also possible.

The buffer stone 1 can be made from porous material, for example partially bonded granular material, and then it does not need any channels 8, 10.

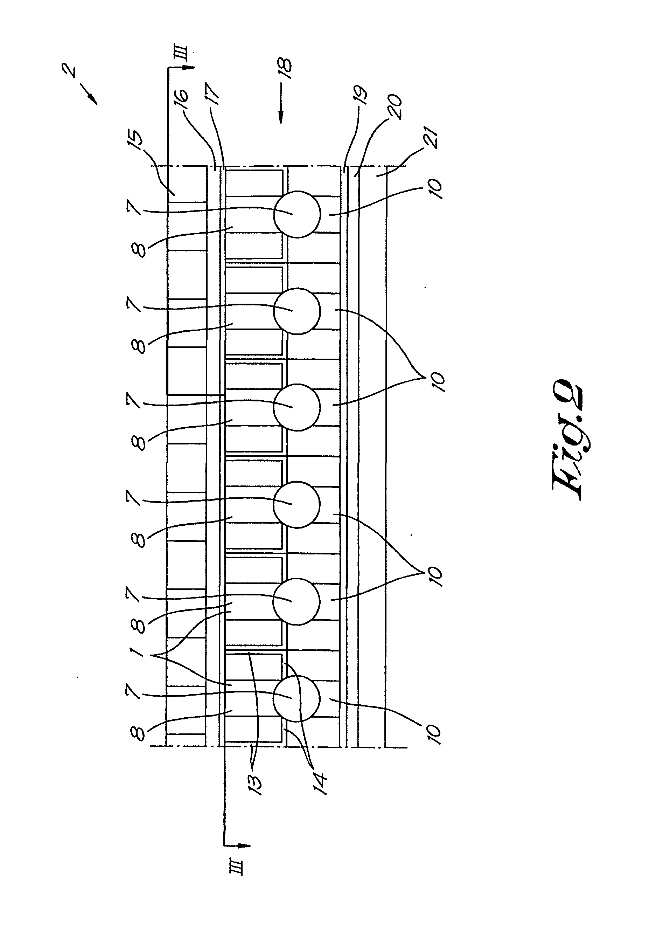

Figure 2 shows a cross-section of a site surfacing 2 according to the invention. It consists, from top to bottom, of a top layer 15 formed by porous paving stones, a layer 16 of fine gravel, a filter cloth 17, for example an anti-root fabric, a buffer layer 18 formed by the buffer stones 1 described above that are placed against one another with their sides 5A,5B,6A,6B, a layer 19 of fine gravel, a filter cloth 20, for example an anti-root fabric and a levelling layer 21 in order to level the subsoil, thus the ground that has to be covered by the site surfacing 2, and which consists of crushed stone debris.

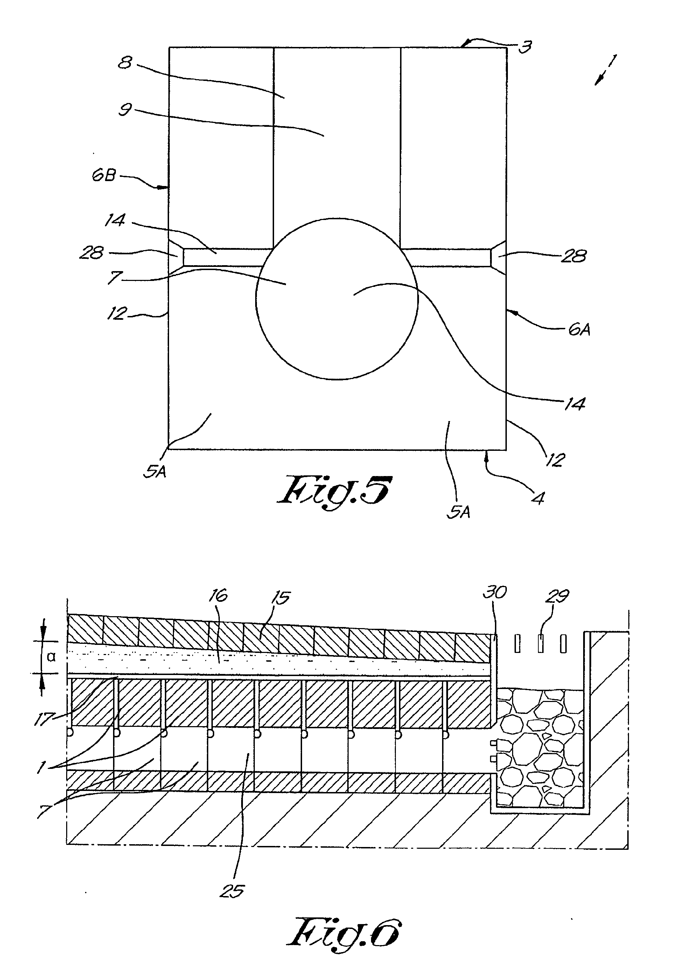

As can be seen, the buffer stones 1 are laid next to one another on the same level, so that the grooves 14 fit together. The corner recesses 13 help realise connections with small positioning variations, but are not further necessary for the invention and thus optional. This is shown in figure 6 and described below.

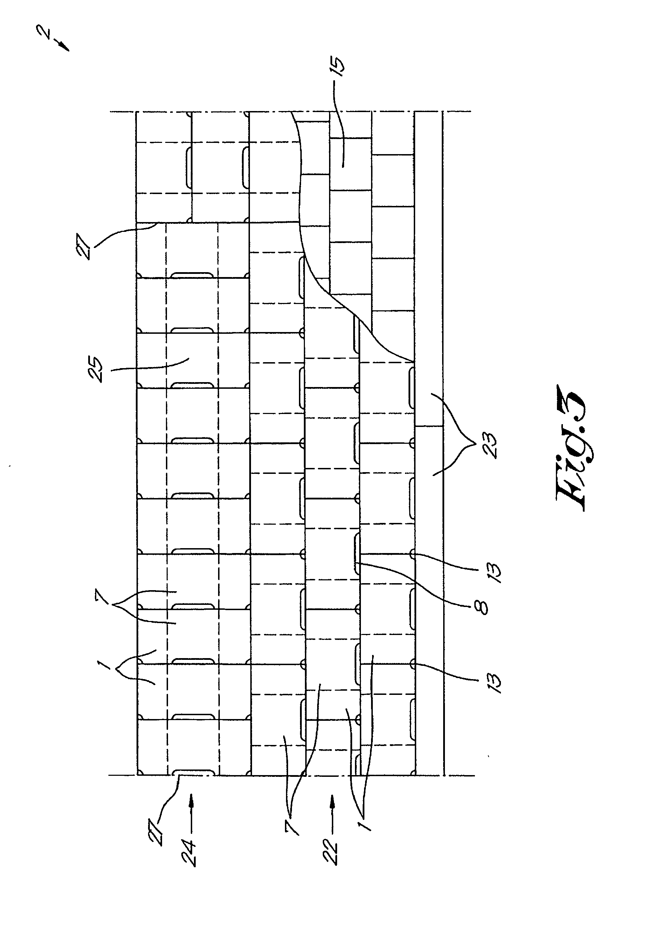

Figure 3 shows a cross-section of the site surfacing 2 of figure 2. The passageways 7 are indicated by dotted lines.

The site surfacing 2 comprises a part 22 in which the buffer stones 1 are in stretcher bond formation.

Because the passageways 7 in the buffer stones 1 extend over less than half of the width B of these buffer stones 1 and are provided centrally in the sides 5A, 5B, each cavity-forming passageway 7 is essentially delimited at both ends in the axial direction and thereby sealed by the sides 5A, 5B of other buffer stones 1.

On account of the inevitable joints between adjacent buffer stones 1, this seal is not absolute but such that a flow between passageways 7 is greatly hindered and as a result each passageway 7 will fill much more quickly during heavy rainfall than it can empty out through the joints, such that the water collected will primarily drain off in the vertical direction, thus towards the subsoil.

Other constructional elements such as kerbstones 23 can also seal off the passageways 7 in the same way.

The site surfacing 2 also comprises a part 24 in which the buffer stones 1 are arranged, i.e. positioned, such that the passageways 7 form a continuous water channel 25.

When rainwater falls it is distributed through the joints of the top layer 15, via the porous layer 16 and 17, to the buffer layer 18. As a result of the first channels 8 and the corner channels 13 in these buffer stones 1, the water is quickly transported to the cavities formed by the passageways 7.

The water can collect here, certainly when a lot of water falls in a short space of time, and gradually, depending on the permeability and saturation of the subsoil, flows away via the second channel 10 and the porous layers 19, 20, 21 to the subsoil, thereby avoiding flooding on the surface of the site surfacing 2.

The water can spread over various passageways 7 via the grooves 14, if a certain passageway 7 becomes full due to the conditions.

Because the various layers above the buffer layer 18, in particular the top layer 15, hold back dirt and seeds that could directly or indirectly clog the first and second channels 8, 10, the corner channels 12, the grooves 14 and the passageways 7 themselves, there is a reduced risk of clogging of the buffer layer 18.

The top layer 15 can be constructed in many alternative ways, such as with porous paving elements such as porous stones, granules such as gravel, or a growth such as grass. A site can of course have different top layers in zones.

As a result the precise desired visual image, and/or other surface properties such as roughness can be obtained.

By varying the way in which the buffer stones 2 are laid or arranged over a site, between a way in which water channels 25 are formed, such as part 24 in figure 3, and a way in which the passageways 7 are closed, such as part 22 in figure 3, good control of the water management of a site can be obtained.

For example, when a non-porous top layer is used, water channels 25 are placed under the top layer to get water as quickly as possible from a place next to this top layer to the buffering capacity formed by the buffer stones 2 below the top layer.

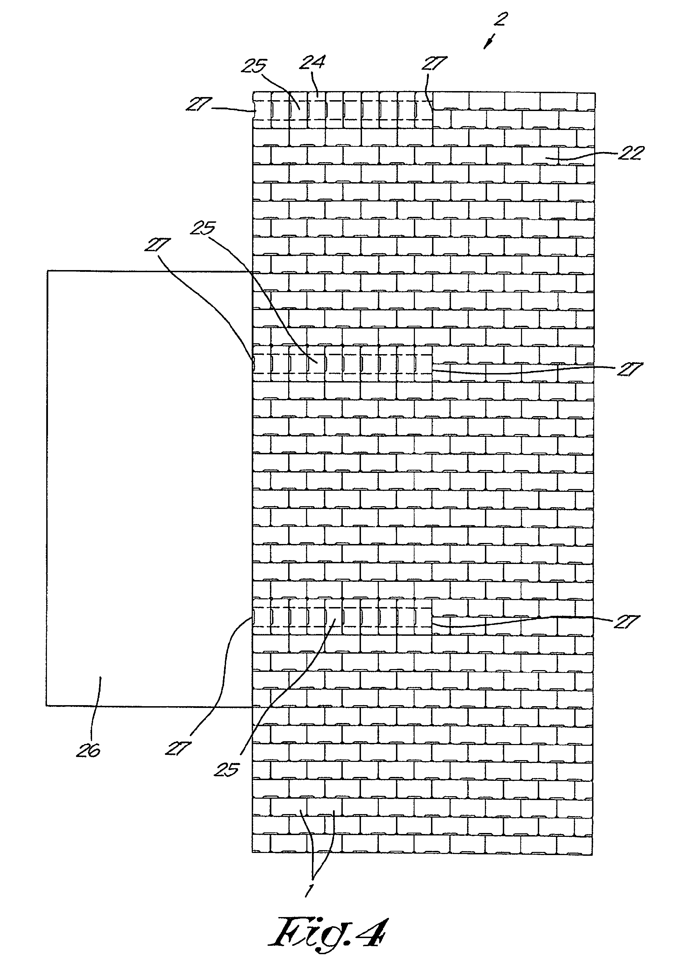

As illustrated in figure 4, the site surfacing 2 according to the invention can also be used in combination with a non-porous construction, for example a car park in combination with a building 26.

In places where water flows from the building 26, water channels 25 formed by buffer stones 2 can be provided in the buffer layer 18 with a regular spacing between them, that flow away from the building 26, so that water can easily flow through these water channels 25 to the adjacent site surfacing 2 that forms the car park and which has a buffering action.

When normally used for buffering, the water channels 25 are closed at least at one end 27 by adjacent buffer stones 1 or other constructional elements, so that they cannot accidentally lead to water courses outside the site and cause them to overflow.

However, it is not ruled out that the drainage of water from the site to a place located next to the site is needed when the buffer cavities become too full and threaten to overflow, in which case an unclosed water channel 25 can of course easily be made.

The combination of the building 26 and the site surfacing 2 is provided with means, such as site drainage, gutters, drainpipes, grids, etc, to guide water from the building to the site surfacing 2.

As a result, these means can be constructed, for example as downpipes, such they that guide water from the roof of the building 26 directly to the buffer layer 18, and then preferably to an end 27 of the water channel 25, to obtain the fastest possible distribution of the water in the buffering site surfacing 2.

Figure 5 shows a variant of the buffer stone 1 of figure 1, which is also suitable for use in the site surfacing 2 according to the invention.

This buffer stone 1 differs from the buffer stone 1 of figure 1 through there not being a second recess 11 to form a second channel 10, such that the buffer stone is easier to make, and such that a better delaying effect on the release of buffered water is obtained because it can only flow away through the joints between the buffer stones 1.

There are also no corner recesses 13. The grooves 14 at the corner edging are widened 28 in order to enable a better connection.

In the above example, the top layer 15 is porous. It can also be constructed so as not to be porous, as shown in figure 6.

In such a case, with a slight incline α, for example 2° as in figure 6, of the non-porous part of the site surfacing 2, the water is drained off to an adjacent gravel bed 30 covered with a grid 29, after which the water can flow via openings in the gravel bed to the water channel 25 formed by the buffer stones 1 under the non-porous top layer 15, and be buffered there.

Alternatively the water can drain off to an adjacent site surfacing 2 according to the invention that does have a porous top layer, after which the water can flow to the buffer stones under the non-porous top layer 15 via a collective buffer layer 18 and can be buffered there.

The present invention is by no means limited to the embodiments of a site surfacing described as an example and shown in the drawings, but a site surfacing according to the invention and the use thereof can be realised in all kinds of variants, without departing from the scope of the invention.

## Claims

1. Site surfacing (2) with at least two layers, whereby a first layer is a top layer (15), and whereby a second layer (18), located under the first layer, at least partly consists of buffer stones (1) that are each provided with at least one buffer cavity (7) for water, whereby the first layer (15) is water-permeable, whereby layers (16, 17) between the first layer (15) and the second layer (18), if present, are porous, **characterised in that** the buffer stones (1) each have a top surface (3), a bottom surface (4) and sides (5A,SB,6A,6B) that extend between the top (3) and bottom surface (4), and that the buffer cavity (7) of a buffer stone (1) is open on two opposite sides (5A,5B,6A,6B) of the buffer stone (1).

2. Site surfacing (2) according to claim 3, **characterised in that** the buffer stones (1) are provided with at least one buffer cavity (7) in the form of a passageway between opposite sides (5A, 5B, 6A, 6B), whereby a first recess (9) is provided in at least one of the opposite sides (5A, 5B, 6A, 6B) to form a channel (8) that connects the aforementioned buffer cavity (7) to the top surface (3), and whereby in at least one of the opposite sides (5A, 5B, 6A, 6B) there is a second recess (11) to form a channel (10) that connects the buffer cavity (7) to the bottom surface (4).

3. Site surfacing (2) according to claim 2, **characterised in that** each buffer stone (2) is provided with grooves (14) that connect the buffer cavity (7) to at least two corner edgings (12) where every two sides (5A, 5B, 6A, 6B) meet.

4. Site surfacing (2) according to claim 3, **characterised in that** the grooves (14) connect to the buffer cavity (7) at a level equal to or above the level that represents two thirds of the volume of the buffer cavity (7).

5. Site surfacing (2) according to any one of claims 2 to 4, **characterised in that** the buffer stones(1) are arranged at least partly according to a pattern such that the buffer cavities (7) of at least one buffer stone (1) at one or at both open ends of the passageways are essentially closed by adjacent buffer stones (1) or other constructional elements (23) that form part of the second layer (18) or border it.

6. Site surfacing (2) according to any one of claims 2 to 5, **characterised in that** the buffer stones (1) are at least partly arranged according to a pattern such that a buffer cavity (7) of at least one buffer stone (1) has an open connection at both ends to a buffer cavity (7) of another buffer stone (1) to form a water channel (25).

7. Site surfacing (2) according to claim 5 and 6, **characterised in that** at least one buffer cavity (7), that is essentially closed at one open end of the passageway by adjacent buffer stones (1) or other constructional elements (2), forms part of the water channel (25).

8. Site surfacing (2) according to any one of the previous claims, **characterised in that** the first layer (15) at least partly consists of paving elements between which porous joints are provided.

9. Site surfacing (2) according to any one of the previous claims, **characterised in that** the first layer (15) at least partly consists of paving elements that are porous.

10. Site surfacing (2) according to any one of the previous claims, **characterised in that** the second layer (18) forms a foundation for the first layer (15).

11. Site surfacing (2) according to any one of the previous claims, **characterised in that** both layers (15, 18) are on a different incline, whereby the second layer (18) is more horizontal than the first layer (15).

12. Site surfacing (2) according to any one of the previous claims, **characterised in that** it is not provided with a drain that is designed to drain water from the site surfacing (2) when the quantity of water in the buffer cavities (7) is less than 50% of the volume of the buffer cavities (7).

13. Use of a site surfacing (2) according to any one of the previous claims in order to at least partly cover a site, whereby next to or on the site there is a construction (26) that is not porous, and whereby the combination of the site and non-porous construction (26) is provided with means to guide rainwater that falls on the non-porous construction (26) to the part of the site covered by the site surfacing (2).

14. Use according to claim 13, **characterised in that** the means to guide rainwater that falls on the non-porous construction (26) to the part of the site covered by the site surfacing (2), guide this rainwater to the second layer (18).

15. Use according to claim 13 or 14 of a site surfacing (2) according to claim 6 or 7, **characterised in that** the water channel (25) runs from a position to which the rainwater is guided on the part of the site covered by the site surfacing (2), in a direction away from the non-porous construction (26).
